# EUROPEAN PATENT SPECIFICATION

(11) **EP 2 659 966 B1**
(45) Date of publication and mention of the grant of the patent: **14.10.2015**
(21) Application number: 10861347.2
(22) Date of filing: 29.12.2010
(51) Int. Cl.: H01M 4/92, B01J 23/42, B01J 21/18, B01J 37/16, B01J 37/34, H01M 8/10, B01J 37/00, B01J 37/02

(54) **PT/GRAPHENE CATALYST, PREPARATION METHOD AND USE THEREOF**
PT/GRAPHEN-KATALYSATOR, VERFAHREN ZU SEINER HERSTELLUNG UND VERWENDUNG
CATALYSEUR EN PT/GRAPHÈNE, SON PROCÉDÉ DE PRÉPARATION ET SON UTILISATION

(43) Date of publication of application: 06.11.2013
(73) Proprietor: Ocean's King Lighting Science&Technology Co., Ltd., Shenzhen, Guangdong 518054 (CN)
(72) Inventor: ZHOU, Mingjie, Shenzhen Guangdong 518054 (CN); ZHONG, Linglong, Shenzhen Guangdong 518054 (CN); WANG, Yaobing, Shenzhen Guangdong 518054 (CN)
(74) Representative: Michalski Hüttermann & Partner Patentanwälte mbB
(86) International application number: PCT/CN2010/080457
(87) International publication number: WO 2012/088681

(56) References cited:
- CN-A- 101 214 437
- CN-A- 101 714 463
- CN-A- 101 814 607
- US-A1- 2007 161 501
- B.SEGER AND P.V.KAMAT: "ELECTROCATALYTICALLY ACTIVE GRAPHENE-PLATINUM NANOCOMPOSITES", THE JOURNAL OF PHYSICAL CHEMISTRY LETTERS C, vol. 113, 15 April 2009 (2009-04-15), pages 7990-7995, XP002724166,
- Y. SI AND E.T. SAMULSKI: "EXFOLIATED GRAPHENE SEPARATED BY PLATINUM NANOPARTICLES", CHEM.MATER., vol. 20, 15 October 2008 (2008-10-15), pages 6792-6797, XP002724167,
- Y.LIANG, D. WU, X.FENG AND K.MÜLLEN: "DISPERSION OF GRAPHENE SHEETS IN ORGANIC SOLVENTS SUPPORTED BY IONIC INTERACTIONS", ADV.MAT., vol. 21, 6 February 2009 (2009-02-06), pages 1679-1683, XP002724168,

## Description

### FIELD OF THE INVENTION

The present invention relates to a field of electrochemical energy, and more particularly relates to Pt/graphene catalyst which is used in a proton exchange membrane fuel cell. The present invention also relates to a preparation method and a use of Pt/graphene catalyst.

### BACKGROUND OF THE INVENTION

Proton exchange membrane fuel cell (PEMFC) is a new generation of power generation device using hydrogen as the fuel, besides the general advantages of the fuel cell (high energy conversion efficiency and environmental friendliness), it has prominent advantages of high specific power, high specific energy, low working temperature, fast start-up and long life at room temperature, which make the PEMFC the most promising fuel cell.

Electrocatalysts of PEMC is a key factor which restricts the commercialization, the study on electrocatalysts dominates the research on PMEC. As pointed out by Lippard who is the dean of MIT's chemistry department in reviewing the development of the chemistry in the 20^{th} century that the biggest regret of the 20^{th} century chemistry was the failure to develop an excellent fuel cell catalyst.

The preparation method of the catalyst has great influence on the particle size and crystalline state of Pt catalyst, the present method reported for preparation of Pt/graphene catalyst mainly including inorganic colloid method, impregnation method, sol-gel method, and precipitation method, etc. Catalyst prepared by these methods has the problems of poor particle dispersion, unevenness of the particle diameter and relatively harsh reaction condition. As the preparation process determines the composition and structure of the catalyst, thereby affects its catalytic performance, the research on the method and process of preparation of the catalyst is very important.

The theory of graphene has been studied for more than 60 years, it has been widely used to study the performance of the different structure of the carbonaceous material. In Science, 2009, vol 324: 1530, Geim pointed out that graphene is a carbon material having less than 10 layers of the layered structure of the graphite molecules, it has higher specific surface area (the theoretical specific surface area of graphene is up to 2620m²/g) and can provide more life load position. Meanwhile, graphene exhibits strong quantum effects, and has good electronic conductivity. According to the first principle calculation, Pt group can be stably loaded on the graphene, the absorption of carbon monoxide or hydrogen on the metal platinum particles will be reduced because of the presence of the graphene which would facilitate the reaction in the fuel cell. Some methods to achieve metal loaded graphene have been described in the literature. B. Seger et al. describe the use of a 2-D carbon nanostructure, graphene, as a support material for the dispersion of Pt nanoparticles, which provides new ways to develop advanced electrocatalyst materials for fuel cells. Platinum nanoparticles are deposited onto graphene sheets by means of borohydride reduction of H₂PtCl₆ in a graphene oxide (GO) suspension. The partially reduced GO-Pt catalyst is deposited as films onto glassy carbon and carbon Toray paper by drop cast or electrophoretic deposition methods ("Electrocatalytically active graphene-platinum Nanocomposites", The Journal of Physical Chemistry Letters C, vol. 113, 15 April 2009 (2009-04-15), pages 7990-7995, XP002724166).
Y. Si et al report a metal nanoparticle-graphene composite with a partially exfoliated graphene morphology derived from drying aqueous dispersions of platinum nanoparticles adhered to graphene. Platinum nanoparticles with diameters spanning several nanometers are adhered to graphene by a chemical route involving the reduction of metal precursors in a graphene dispersion. Face-to-face aggregation of graphene sheets is arrested by 3-4 nm fcc Pt crystallites on the graphene surfaces, and in the resulting jammed Pt-graphene composite, the Pt acts as spacers resulting in mechanically exfoliated, high-surface-area material of potential interest for supercapacitors and fuel cells (Y. Si et al., "Exfoliated graphene separated by platinum nanoparticles", Chem. Mater., vol. 20, 15 October 2008 (2008-10-15), pages 6792-6797, XP002724167).
Furthermore, Y. Liang et al. disclose a potentially salable and environmentally friendly method for the production of GO and RGO sheets dispersed in chloroform ("Dispersion of graphene sheets in organic solvents supported by ionic interactions", Adv. Mat., vol. 21, 6 February 2009 (2009-02-06), pages 1679-1683, XP002724168). In CN 101 214 437 (A) a reverse micelles method of preparing platinum ruthenium/carbon catalyst is disclosed , which includes the following steps: 0.02 to 0.10mol/L chloroplatinic acid aqueous solution and 0.04 to 0.20 mol/L ruthenium trichloride aqueous solution are prepared to form water phase; hexamethylene is prepared into oil phase, sodium laurylsulfate is taken as surfactant and n-octyl alcohol is taken as cosurfactant; the mass ratio of sodium laurylsulfate, hexamethylene and n-octyl alcohol is 1:0.07 to 0.15:0.5 to 1.2; the product is mixed and added in carbon black, and the receives ultrasonic vibration and mechanical mixing for 20 to 60 min, so that a reverse micelle is loaded on the carbon black; a reducing agent, demulsifier acetone and solution are added for filtration and drying. Therefore, graphene can be used as a good carbon carrier.

### SUMMARY OF THE INVENTION

Based on the problems mentioned above, one object of the present invention is to provide a preparation method of a Pt/graphene catalyst which includes the steps of :
1. Preparation of a graphite oxide: a graphite oxide is prepared by using graphite powder according to modified Hummers method.
2. Preparation of a graphene oxide solution: the prepared graphite oxide is added into water, and then ultrasonically dispersed to form a graphene oxide solution with uniformly dispersed monolithic layer.
3. Preparation of a reverse micellar system: a mixing system containing surfactant (anionic surfactant or cationic surfactant, such as methyl benzene sulfonate, sodium dodecyl benzene sulfonate, aliphatic sulfates, quaternary ammonium salts, etc.), cosurfactant (such as n-octanol, n-nonyl alcohol, n-heptanol, n-hexyl alcohol), oil phase (such as cyclohexane) and chloroplatinic acid aqueous solution with the molar concentration of 0.04mol/L is prepared at room temperature, the mixing system is ultrasonically dispersed to form a uniform and stable reverse micellar system; the mass ratio of the surfactant, the cosurfactant and the oil phase is 10:7:1.
4. Formation of a precursor: the prepared graphene oxide solution is slowly added dropwise into the reverse micellar system.
5. Reduction of the precursor: in 80°C water bath, excess amount of reducing agent (such as hydrazine hydrate or sodium borohydride, the molar amount of the reducing agent is 3 to 10 times of the molar amount of the chloroplatinic acid) is added into the reverse micelle system, the chloroplatinic acid and the graphene oxide are reduced to Pt and the graphene, an emulsion containing Pt and graphene is prepared; H₂PtCl₆ is now used as an example, KBH₄ is used as a reducing agent, the reaction equation is:

   H₂PtCl₆+KBH₄→Pt+H₂↑+2HCl+KCl+BCl₃
6. Demulsification: a demulsifier (such as acetone or ethanol, the adding volume of the demulsifier is 20% to 50% of the adding volume of the cyclohexane) is added into the emulsion under ultrasonic vibration, Pt is loaded on the graphene carrier to form a mixing system.
7. Filtering, washing and drying: the demulsified mixing system is vacuum filtrated, and then sequentially washed and filtered with ethanol and deionized water for several times, the filtered graphene loaded with Pt is dried at the temperature of 70°C under vacuum condition for 2 hours to obtain the Pt/graphene catalyst.

The Pt/graphene catalyst prepared by the method contains graphene as a carrier, Pt is loaded on the graphene.

The Pt/graphenene prepared according to the present invention can be used in the field of proton exchange membrane fuel cell.

The Pt/graphene catalyst of the present invention uses graphene as carrier and takes advantage of the ion effect and two dimensional ductility of the graphene, which increases the stability of the catalyst. The reverse micelles system provides a micro-environment (water-in-oil microemulsion), which is an idea place for particle synthesis, the particle size of the nano-particles prepared according to the method can be regulated easily and is more uniformly distributed.

### BRIEF DESCRIPTION OF THE DRAWINGS

FIG. 1 is a flow chart of the preparation of Pt/graphene catalyst according to the present invention.
FIG. 2 is an electrocatalytic performance test chart of the membrane electrode of the Pt/graphene catalyst prepared in Example 1 and Pt/C the catalyst.

### DETAILED DESCRIPTION OF THE EMBODIMENTS

The present invention provides a preparation method of Pt/graphene catalyst which is used in the proton exchange membrane fuel cell, wherein the loading amount of Pt is 5~80w%, the use of graphene as carrier for the catalyst takes advantage of the ion effect and two-dimensional ductility of graphene, which increases the stability of the catalyst.

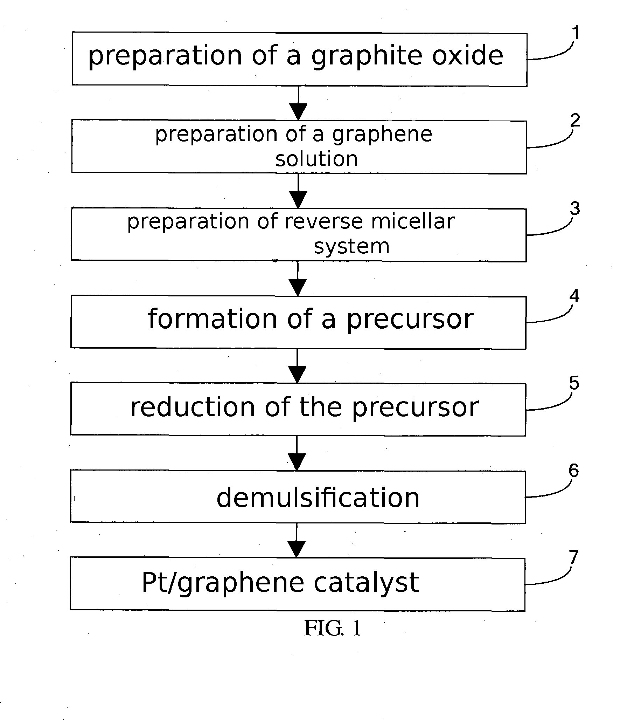

Referring to FIG. 1, the preparation method of the Pt/graphene catalyst includes:
1. Preparation of a graphite oxide: a graphite oxide is prepared by using graphite powder according to improved Hummers method.
2. Preparation of a graphene oxide solution: the prepared graphite oxide is added into water, and then ultrasonically dispersed to form a graphene oxide solution with uniformly dispersed monolithic layer.
3. Preparation of a reverse micellar system: A mixing system containing surfactant (Anionic surfactant or cationic surfactant, such as methyl benzene sulfonate, sodium dodecyl benzene sulfonate, aliphatic sulfates, quaternary ammonium salts, etc.), cosurfactant (such as n-octanol, n-nonyl alcohol, n-heptanol, n-hexyl alcohol), oil phase (such as cyclohexane) and chloroplatinic acid aqueous solution with the molar concentration of 0.04moL/L is prepared at room temperature, the mixing system is ultrasonically dispersed to form a uniform and stable reverse micellar system; the mass ratio of the surfactant, the cosurfactant and the oil phase is 10:7:1.
4. Formation of a precursor: the prepared graphene oxide solution is slowly added dropwise into the reverse micellar system.
5. Reduction of the precursor: in 80°C water bath, excess amount of reducing agent (such as hydrazine hydrate or sodium borohydride, the molar amount of the reducing agent is 3 to 10 times that of the molar amount of the chloroplatinic acid) is added into the reverse micelle system, the chloroplatinic acid and the graphene oxide are reduced to Pt and the graphene, a emulsion containing Pt and graphene is prepared and the mass ratio of Pt and graphene is 1:10; H₂PtCl₆ is now used as an example, KBH₄ is taken as a reducing agent, the reaction equation is:

   H₂PtCl₆+KBH₄→Pt+H₂↑+2HCl+KCl+BCl₃
6. Demulsification: the demulsifier (such as acetone or ethanol, the adding volume of the demulsifier is 20 to 50 % of the adding volume of the cyclohexane) is added into the emulsion under ultrasonic vibration, Pt is loaded on the graphene carrier to form a mixing system.
7. Filtering, washing and drying:the demulsified mixing system is vacuum filtrated, and then sequentially washed and filtered with ethanol and deionized water for several times, the filtered graphene loaded with Pt is dried at the temperature of 70°C under vacuum condition for 2 hours to obtain the Pt/graphene catalyst.

Wherein, the preparation of graphite oxide comprises:
1. The graphite powder, potassium persulfate and phosphorus pentoxide are added into a concentrated sulfuric acid at a temperature of 80°C, and then stirred uniformly, cooled for more than 6 hours, washed to neutral, dried to obtain a sample;
2. The dried sample is added into 200 to 250mL of concentrated sulfuric acid, then potassium permanganate is added, the mixture is heat preserved at a temperature of 0 to 20°C for 5 to 60 minutes, then maintained at a temperature of 35°C in an oil bath for 1 to 2 hours, deionized water containing hydrogen peroxide is slowly added to obtain a mixture;
3. The mixture is hot filtrated when the color of the mixture becomes bright yellow, and then washed with hydrochloric acid and filtered, the mixture is vacuum dried at a temperature of 60°C for 48 hours to obtain the graphite oxide.

The Pt/graphene catalyst prepared according to the above method contains graphene as a carrier and Pt is loaded on the graphene.

The prepared Pt/graphene in the present invention can be used in the field of proton exchange membrane fuel cell.

In the Pt/graphene catalyst of the present invention, the use of graphene as carrier takes advantage of the ion effect and two-dimensional ductility of graphene, which increases the stability of the catalyst. The use of the reverse micelles system provides a micro-environment (i.e. water-in-oil microemulsion), which is an idea place for the particle synthesis; the particle size of the resulting nano-particles can be regulated easily and is more uniformly distributed.

The preferred embodiments of the present invention are further described in connection with the accompanying drawings.

### Example 1

1. Preparation of a graphite oxide: a graphite oxide was prepared according to modified Hummers method. The specific steps included: 20g of 50 mesh graphite powder, 10g of potassium persulfate and 10g of phosphorus pentoxide were added into concentrated sulfuric acid at a temperature of 80°C, and then the mixture was stirred uniformly, cooled for more than 6 hours, washed to neutral and dried to obtain a sample. The dried sample was added into 230mL of concentrated sulfuric acid at a temperature of 0°C, then 60g of potassium permanganate was added, the mixture was maintained below 20°C for 30 minutes, after being maintainined in the oil bath at a temperature of 35°C for 2 hours, 920mL of deionized water was slowly added. After 15 minutes, 2.8L of deionized water (containing 50mL of hydrogen peroxide with the concentration of 30%) was added, the mixture was hot filtrated when the color of the mixture became bright yellow, and then washed with 5L of hydrochloric acid with the concentration of 10%, filtrated, vacuum dried at a temperature of 60°C for 48 hours to obtain graphite oxide.
2. Preparation of a graphene oxide solution: 0.5g of the graphite oxide was added into 200mL of water, and ultrasonically dispersed to form a graphene oxide solution with uniformly dispersed monolithic layer;
3. Preparation of a reverse micellar system: at room temperature, sodium dodecyl benzene sulfonate, n-octanol and cyclohexane were mixed according to a mass ratio of 100:70:10, sodium dodecyl benzene sulfonate was added into water according to a molar ratio of sodium dodecyl benzene sulfonate to water of 1:7, ultrasonically vibrated for 30 minutes, 0.04moL/L of chloroplatinic acid solution was slowly added dropwise into the mixed solution, ultrasonically vibrated for 30 minutes to form a transparent reverse micellar system.
4. Formation of a precursor: the prepared graphene oxide solution was slowly added dropwise into the reverse micellar system, ultrasonically vibrated for 30 minutes. The mass ratio of Pt and graphene was 1:10.
5. Reduction of the precursor: in water bath at a temperature of 80°C, excess amount of sodium borohydride was added into the reverse micellar system, then ultrasonically vibrated for 2 hours, such that the graphene oxide and the chloroplatinic acid were reduced.
6. Demulsification: 30mL of the demulsifier of acetone was added into the above system under ultrasonically vibration, and the system was then stood until the system was stratified.
7. Filtering, washing and drying: the solution was filtered, the filtering cake was washed with ethanol solution and deionized water for several times, the catalyst was vacuum dried at a temperature of 70°C for 2 hours to obtain a Pt/graphene catalyst.

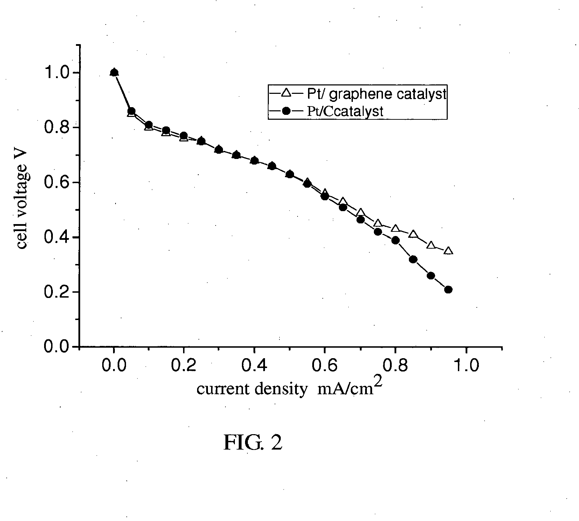

FIG. 2 was the electrocatalytic performance test chart of the membrane electrode of the Pt/graphene catalyst prepared in Example 1 and the Pt/C catalyst. The preparation of the membrane electrode included the following steps: the carbon paper was evenly coated with the Pt/graphene catalyst obtained in example 1 to form an electrode, then two electrodes and the Nafion proton exchange membrane (DuPont, USA) were deposited at a temperature of 140°C under a pressure of 0.3Mpa to form a membrane electrode. Test conditions of the electrocatalytic performance of the membrane electrode were shown as follows: the membrane electrode was loaded within the proton exchange membrane monomer battery, the fuel cell tester was connected to the battery, the effective area of the membrane eltctrode was 4cm², pure hydrogen and pure oxygen were fed while testing. The Pt/C catalyst was also prepared into membrane electrode using the same method and it was tested, it can be seen that the catalytic performance of the Pt/graphene was better at the higher current density.

### Example 2

1. Preparation of a graphite oxide: a graphite oxide was prepared according to modified Hummers method. The specific steps included: 20g of 50 mesh graphite powder, 10g of potassium persulfate and 10g of phosphorus pentoxide were added into concentrated sulfuric acid at a temperature of 80°C, and then the mixture was stirred uniformly, cooled for more than 6 hours, washed to neutral and dried to obtain a sample. The dried sample was added into 230mL of concentrated sulfuric acid at a temperature of 0°C, then 60g of potassium permanganate was added, the mixture was maintained below 20°C for 30 minutes, after being maintainined in the oil bath at a temperature of 35°C for 1 hours, 920mL of deionized water was slowly added. After 15 minutes, 2.8L of deionized water (containing 50mL of hydrogen peroxide with the concentration of 30%) was added, the mixture was hot filtrated when the color of the mixture became bright yellow, and then washed with 5L of hydrochloric acid with the concentration of 10%, filtrated, vacuum dried at a temperature of 60°C for 48 hours to obtain graphite oxide.
2. Preparation of a graphene oxide solution: 0.5g of the graphite oxide was added into 200mL of water, and ultrasonically dispersed to form a graphene oxide solution with uniformly dispersed monolithic layer;
3. Preparation of a reverse micellar system: at room temperature, methyl benzene sulfonate, n-octanol and cyclohexane were mixed according to a mass ratio of 100:70:10, methyl benzene sulfonate was added into water according to a molar ratio of sodium dodecyl benzene sulfonate to water of 1:7, ultrasonically vibrated for 30 minutes, 0.04moL/L of chloroplatinic acid solution was slowly added dropwise into the mixed solution, ultrasonically vibrated for 30 minutes to form a transparent reverse micellar system.
4. Formation of a precursor: 10%-60%, the prepared graphene oxide solution was slowly added dropwise into the reverse micellar system, ultrasonically vibrated for 30 minutes. The mass ratio of Pt and graphene was 1:10.
5. Reduction of the precursor: in water bath at a temperature of 80°C, excess amount of sodium borohydride was added into the reverse micellar system, then ultrasonically vibrated for 2 hours, such that the graphene oxide and the chloroplatinic acid were reduced.
6. Demulsification: 30mL of the demulsifier of acetone was added into the above system under ultrasonically vibration, and the system was then stood until the system was stratified.
7. Filtering, washing and drying: the solution was filtered, the filtering cake was washed with ethanol solution and deionized water for several times, the catalyst was vacuum dried at a temperature of 70°C for 2 hours to obtain a Pt/graphene catalyst.

### Example 3

1. Preparation of a graphite oxide: a graphite oxide was prepared according to modified Hummers method. The specific steps included: 20g of 50 mesh graphite powder, 10g of potassium persulfate and 10g of phosphorus pentoxide were added into concentrated sulfuric acid at a temperature of 80°C, and then the mixture was stirred uniformly, cooled for more than 6 hours, washed to neutral and dried to obtain a sample. The dried sample was added into 250mL of concentrated sulfuric acid at a temperature of 0°C, then 60g of potassium permanganate was added, the mixture was maintained below 20°C for 60 minutes, after being maintainined in the oil bath at a temperature of 35°C for 2 hours, 920mL of deionized water was slowly added. After 15 minutes, 2.8L of deionized water (containing 50mL of hydrogen peroxide with the concentration of 30%) was added, the mixture was hot filtrated when the color of the mixture became bright yellow, and then washed with 5L of hydrochloric acid with the concentration of 10%, filtrated, vacuum dried at a temperature of 60°C for 48 hours to obtain graphite oxide.
2. Preparation of a graphene oxide solution: 0.5g of the graphite oxide was added into 200mL of water, and ultrasonically dispersed to form a graphene oxide solution with uniformly dispersed monolithic layer;
3. Preparation of a reverse micellar system: at room temperature, methyl benzene sulfonate, n-octanol and cyclohexane were mixed according to a mass ratio of 100:70:10, methyl benzene sulfonate was added into water according to a molar ratio of sodium dodecyl benzene sulfonate to water of 1:7, ultrasonically vibrated for 30 minutes, 0.04moL/L of chloroplatinic acid solution was slowly added dropwise into the mixed solution, ultrasonically vibrated for 30 minutes to form a transparent reverse micellar system.
4. Formation of a precursor: the prepared graphene oxide solution was slowly added dropwise into the reverse micellar system, ultrasonically vibrated for 30 minutes. The mass ratio of Pt and graphene was 1:10.
5. Reduction of the precursor: in water bath at a temperature of 80°C, excess amount of hydrazine hydrate solution was added into the reverse micellar system, then ultrasonically vibrated for 2 hours, such that the graphene oxide and the chloroplatinic acid were reduced.
6. Demulsification: 30mL of the demulsifier of acetone was added into the above system under ultrasonically vibration, and the system was then stood until the system was stratified.
7. Filtering, washing and drying: the solution was filtered, the filtering cake was washed with ethanol solution and deionized water for several times, the catalyst was vacuum dried at a temperature of 70°C for 2 hours to obtain a Pt/graphene catalyst.

### Example 4

1. Preparation of a graphite oxide: a graphite oxide was prepared according to modified Hummers method. The specific steps included: 20g of 50 mesh graphite powder, 10g of potassium persulfate and 10g of phosphorus pentoxide were added into concentrated sulfuric acid at a temperature of 80°C, and then the mixture was stirred uniformly, cooled for more than 6 hours, washed to neutral and dried to obtain a sample. The dried sample was added into 240mL of concentrated sulfuric acid at a temperature of 0°C, then 60g of potassium permanganate was added, the mixture was maintained below 20°C for 40 minutes, after being maintainined in the oil bath at a temperature of 35°C for 2 hours, 920mL of deionized water was alowly added. After 15 minutes, 2.8L of deionized water (containing 50mL of hydrogen peroxide with the concentration of 30%) was added, the mixture was hot filtrated when the color of the mixture became bright yellow, and then washed with 5L of hydrochloric acid with the concentration of 10%, filtrated, vacuum dried at a temperature of 60°C for 48 hours to obtain graphite oxide.
2. Preparation of a graphene oxide solution: 0.5g of the graphite oxide was added into 200mL of water, and ultrasonically dispersed to form a graphene oxide solution with uniformly dispersed monolithic layer;
3. Preparation of a reverse micellar system: at room temperature, sodium dodecyl benzene sulfonate, n-octanol and cyclohexane were mixed according to a mass ratio of 100:70:10, sodium dodecyl benzene sulfonate was added into water according to a molar ratio of sodium dodecyl benzene sulfonate to water of 1:8, ultrasonically vibrated for 30 minutes, 0.04moL/L of chloroplatinic acid solution was slowly added dropwise into the mixed solution, ultrasonically vibrated for 30 minutes to form a transparent reverse micellar system.
4. Formation of a precursor: the prepared graphene oxide solution was slowly added dropwise into the reverse micellar system, ultrasonically vibrated for 30 minutes. The mass ratio of Pt and graphene was 1:10.
5. Reduction of the precursor: in water bath at a temperature of 80°C, excess amount of sodium borohydride was added into the reverse micellar system, then ultrasonically vibrated for 2 hours, such that the graphene oxide and the chloroplatinic acid were reduced.
6. Demulsification: 30mL of the demulsifier of acetone was added into the above system under ultrasonically vibration, and the system was then stood until the system was stratified.
7. Filtering, washing and drying: the solution was filtered, the filtering cake was washed with ethanol solution and deionized water for several times, the catalyst was vacuum dried at a temperature of 70°C for 2 hours to obtain a Pt/graphene catalyst.

Although the invention has been described in language specific to structural features and/or methodological acts, it is to be understood that the invention defined in the appended claims is not necessarily limited to the specific features or acts described. Rather, the specific features and acts are disclosed as sample forms of implementing the claimed invention.

## Claims

1. A preparation method of a Pt/graphene catalyst, comprising the steps of:
performing an oxidation reaction with graphite powder according to a Hummers method to obtain graphite oxide by adding graphite powder, potassium persulfate and phosphorus pentoxide into a concentrated sulfuric acid at a temperature of 80°C, stirring uniformly and cooling for more than six hours, washing to neutral, drying to obtain a sample;
adding the dried sample into 200 to 250mL of concentrated sulfuric acid, then adding potassium permanganate, heat preserving at a temperature of 0 to 20°C for 5 to 60 minutes, maintaining at a temperature of 35°C in an oil bath for 1 to 2 hours, slowly adding deionized water containing hydrogen peroxide to obtain a mixture; and
hot filtrating the mixture when the color of the mixture becomes bright yellow, washing with hydrochloric acid and then filtering, drying under vacuum condition at a temperature of 60°C for 48 hours to obtain the graphite oxide;
adding the graphite oxide into water and then ultrasonically dispersing to form a graphene oxide solution with uniformly dispersed monolithic layer;
preparing a reverse micellar system containing surfactant, co-surfactant, oil phase, and chloroplatinic acid aqueous solution at room temperature;
adding the graphite oxide solution into the reverse micellar system dropwise, and adding catalyst dropwise to perform a reduction reaction under a water bath heating condition to obtain an emulsion containing Pt and graphene;
adding demulsifier into the emulsion dropwise to load Pt on the graphene carrier; and
filtering, washing, and drying the graphene loaded with the Pt to obtain the Pt/graphene catalyst.

2. The preparation method according to claim 1, wherein the mass ratio of the graphite powder, the potassium persulfate and the phosphorus pentoxide is 2:1:1.

3. The preparation method according to claim 1, wherein an adding amount of the potassium permanganate is 3 times of the adding amount of the graphite powder, the concentration of the hydrogen peroxide is wt. 30%.

4. The preparation method according to claim 1, wherein the surfactant is selected from the group consisting of methyl benzene sulfonate, sodium dodecylbenzene sulfonate, aliphatic sulfate and aliphatic quaternary ammonium salts; the co-surfactant is selected from the group consisting of n-octanol, n-nonyl alcohol, n-heptanol, and n-hexyl alcohol; the oil phase is cyclohexane; the molar concentration of the chloroplatinic acid aqueous solution is 0.04 mol/L; the mass ratio of the surface active agent, the cosurfactant, and the oil phase is 10:7:1.

5. The preparation method according to claim1, wherein in the emulsion containing Pt and graphene, the mass ratio of Pt to graphene is 1:10.

6. The preparation method according to claim 1, wherein the reducing agent is hydrazine hydrate or sodium borohydride, the using amount of reducing agent is 3 to 10 times of the amount of chloroplatinic acid.

7. The preparation method according to claim 1, wherein the demulsifier is acetone or ethanol.

## Patentansprüche

1. Ein Verfahren zur Herstellung eines Pt/Graphen Katalysators, umfassend die Schritte: Ausführen einer Oxidationsreaktion nach einer Methode nach Hummer mit Graphitpulver um ein Graphitoxid zu erhalten, indem Graphitpulver, Kaliumpersulfat und Phosphorpentoxid in eine konzentrierte Schwefelsäure mit einer Temperatur von 80°C gegeben werden, gleichmäßigem Rühren und Kühlen für mehr als 6 Stunden, Waschen bis zur Neutralität, Trocknen um eine Probe zu erhalten; Hinzufügen der getrockneten Probe zu 200 bis zu 250ml konzentrierter Schwefelsäure, anschließendes Hinzufügen von Kaliumpermanganat, Hitzekonservieren bei einer Temperatur von 0 bis zu 20°C für 5 bis zu 60 Minuten, Halten bei einer Temperatur von 35°C in einem Ölbad für 1 bis zu 2 Stunden, langsames Hinzugeben entionisierten Wassers enthaltend Wasserstoffperoxid um eine Mischung zu erhalten; und Heißfiltration der Mischung ab dem Zeitpunkt ab dem die Mischung hellgelb wird, Waschen mit Salzsäure und anschließendem Filtern, Trocknen unter Vakuumbedingungen bei einer Temperatur von 60°C für 48 Stunden um das Graphitoxid zu erhalten; Hinzufügen des Graphitoxids zu Wasser und anschließendem Dispergieren mittels Ultraschall um eine Graphenoxidlösung mit einheitlich dispergierter monolithischer Lage zu erhalten; Herstellen eines reversen mizellaren Systems aufweisend ein Tensid, Co-Tensid, Ölphase und wässrige Chloroplatinsäurelösung bei Raumtemperatur tropfenweises Hinzufügen der Graphitoxidlösung in das reverse mizellare System, und tropfenweises Hinzufügen des Katalysators um eine Reduktionsreaktion unter Erhitzung im Wasserbad zu erhalten, um eine Emulsion zu erhalten, welche Pt und Graphen enthält; tropfenweise Hinzufügen eines Demulgators zur Emulsion um das Pt auf den Graphenträger zu laden; und Filtern, Waschen und Trocknen des Pt beladenen Graphens um den Pt/Graphen Katalysator zu erhalten.

2. Das Herstellungsverfahren nach Anspruch 1, wobei das Massenverhältnis des Graphitpulvers, des Kaliumpersulfats und des Phophorpentoxids 2:1:1 beträgt.

3. Das Herstellungsverfahren nach Anspruch 1, wobei ein hinzugefügter Anteil des Kaliumpermanganats das 3fache des hinzugefügten Anteils des Graphitpulvers beträgt, die Konzentration des Wasserstoffperoxids beträgt 30 wt.%.

4. Das Herstellungsverfahren nach Anspruch 1, wobei das Tensid ausgewählt ist aus der Gruppe bestehend aus Methylbenzolsulfonat, Natriumdodecylbenzolsulfonat, aliphatischen Sulfaten und aliphatischen quaternären Ammoniumsalzen; das Co-Tensid ausgesucht ist aus der Gruppe bestehend aus n-Octanol, n-Nonylalkohol, n-Heptanol, und n-Hexylalkohol; die Ölphase ist Cyclohexan; die molare Konzentration der wässrigen Chloroplatinsäurelösung beträgt 0,04 mol/L; das Massenverhältnis der oberflächenaktiven Substanz, des Co-Tensids und der Ölphase beträgt 10:7: 1.

5. Das Herstellungsverfahren nach Anspruch 1, wobei in der Emulsion enthaltend Pt und Graphen, das Massenverhältnis von Pt zu Graphen 1:10 beträgt.

6. Das Herstellungsverfahren nach Anspruch 1, wobei das Reduktionsmittel Hydrazinhydrat oder Natrium Borhydrid ist, die eingesetzte Menge des Reduktionsmittels beträgt das 3 bis 10 fache der Menge an Chloroplatinsäure.

7. Das Herstellungsverfahren nach Anspruch 1, wobei der Demulgator Aceton oder Ethanol ist.

## Revendications

1. Procédé de préparation d'un catalyseur au Pt/graphène, comprenant les étapes consistant à:
exécuter une réaction d'oxydation avec de la poudre de graphite selon un procédé Hummers pour obtenir de l'oxyde de graphite en ajoutant de la poudre de graphite, du persulfate de potassium et du pentoxyde de phosphore dans un acide sulfurique concentré à une température de 80 °C, agiter de façon uniforme et refroidir pendant plus de six heures, laver à neutralisation, sécher pour obtenir un échantillon ;
ajouter l'échantillon séché dans 200 à 250 mL d'acide sulfurique concentré, ensuite ajouter du permanganate de potassium, préserver contre de la chaleur à une température de 0 à 20 °C pendant 5 à 60 minutes, maintenir à une température de 35 °C dans un bain d'huile pendant 1 à 2 heures, ajouter lentement de l'eau déionisée contenant du peroxyde d'hydrogène pour obtenir un mélange ; et
filtrer à chaud le mélange quand la couleur du mélange devient jaune brillant, laver avec de l'acide chlorhydrique et ensuite filtrer, sécher sous condition de vide à une température de 60 °C pendant 48 heures pour obtenir l'oxyde de graphite ;
ajouter l'oxyde de graphite dans de l'eau et ensuite disperser par ultrasons pour former une solution d'oxyde de graphène avec une couche monolithique uniformément dispersée ;
préparer un système micellaire inverse contenant du tensioactif, du cotensioactif, une phase huileuse, et une solution aqueuse d'acide chloroplatinique à température ambiante ;
ajouter la solution d'oxyde de graphite dans le système micellaire inverse au goutte-à-goutte, et ajouter du catalyseur au goutte-à-goutte pour effectuer une réaction de réduction sous une condition de chauffage par bain d'eau pour obtenir une émulsion contenant du Pt et du graphène ;
ajouter un désémulsifiant dans l'émulsion au goutte-à-goutte pour charger du Pt sur le vecteur de graphène ; et
filtrer, laver et sécher le graphène chargé du Pt pour obtenir le catalyseur au Pt/graphène.

2. Procédé de préparation selon la revendication 1, dans lequel le rapport de masse de la poudre de graphite, du persulfate de potassium et du pentoxyde de phosphore est 2:1:1.

3. Procédé de préparation selon la revendication 1, dans lequel une quantité d'ajout du permanganate de potassium est 3 fois la quantité d'ajout de la poudre de graphite, la concentration du peroxyde d'hydrogène est de 30 % en poids.

4. Procédé de préparation selon la revendication 1, dans lequel le tensioactif est sélectionné à partir du groupe consistant en du sulfonate de benzène méthylique, du sulfonate de dodécylbenzène sodique, du sulfate aliphatique et des sels d'ammonium quaternaires aliphatiques ; le cotensioactif est sélectionné à partir du groupe consistant en du n-octanol, de l'alcool n-nonylique, du n-heptanol et de l'alcool n-hexylique ; la phase huileuse est du cyclohexane ; la concentration molaire de la solution aqueuse d'acide chloroplatinique est 0,04 mol/L ; le rapport de masse de l'agent tensioactif, du cotensioactif, et de la phase huileuse est 10:7:1.

5. Procédé de préparation selon la revendication 1, dans lequel dans l'émulsion contenant du Pt et du graphène, le rapport de masse du Pt sur le graphène est 1:10.

6. Procédé de préparation selon la revendication 1, dans lequel l'agent de réduction est de l'hydrate d'hydrazine ou du borohydrure de sodium, la quantité d'utilisation de l'agent de réduction est 3 à 10 fois la quantité d'acide chloroplatinique.

7. Procédé de préparation selon la revendication 1, dans lequel le désémulsifiant est de l'acétone ou de l'éthanol.
